# EUROPÄISCHE PATENTSCHRIFT

(11) **EP 2 356 897 B1**
(45) Veröffentlichungstag und Bekanntmachung des Hinweises auf die Patenterteilung: **14.11.2012**
(21) Anmeldenummer: 10001585.8
(22) Anmeldetag: 17.02.2010
(51) Int. Cl.: A01D 67/00, A01D 34/82, A01D 34/74, A01D 34/81, A01D 67/04

(54) **Aufsitzmäher**
Ride-on mower
Tondeuse à siège

(43) Veröffentlichungstag der Anmeldung: 17.08.2011
(73) Patentinhaber: Viking GmbH, 6336 Langkampfen (AT)
(72) Erfinder: Zimmermann, Sven, 6326 Bad Häring (AT); Gruber, Robert, 6330 Kufstein (AT); Trentini, Jakob, 6020 Innsbruck (AT); Sivetz, David, 6320 Angerberg (AT)
(74) Vertreter: Wasmuth, Rolf

(56) Entgegenhaltungen:
- EP-A1- 1 180 321
- WO-A1-98/09498
- WO-A1-99/11110
- GB-A- 2 178 634
- US-A- 3 796 277
- US-A- 4 835 951
- US-A- 5 142 850

## Beschreibung

Die Erfindung betrifft einen Aufsitzmäher der im Oberbegriff des Anspruchs 1 angegebenen Gattung.

Aus der DE 100 57 885 A1 ist ein Aufsitzmäher bekannt, der einen an einem Chassis angeordneten Sitz besitzt. Zum Entleeren ist der Grasfangbehälter an dem Chassis verschwenkbar angeordnet.

Die GB 2 178 634 A zeigt einen Aufsitzmäher, der drei Mähwerke umfasst. Das hintere Mähwerk ist im Bereich unterhalb des Sitzes des Aufsitzmähers angeordnet. Um die Zugänglichkeit zu dem hinteren Mähwerk zu erleichtern, kann der Sitz nach oben weggeklappt werden. Der Antriebsmotor ist in dem Bereich hinter dem Sitz angeordnet.

Zur Wartung des Antriebsmotors oder eines Getriebes des Aufsitzmähers kann es notwendig sein, Teile des Chassis zu demontieren. Aufgrund des engen Bauraums ist die Zugänglichkeit begrenzt, so dass die Wartung aufwendig sein kann. Auch die Zugänglichkeit zu elektrischen Komponenten des Aufsitzmähers ist bei bekannten Aufsitzmähern erschwert.

Der Erfindung liegt die Aufgabe zugrunde, einen Aufsitzmäher der gattungsgemäßen Art zu schaffen, der einen einfachen Aufbau besitzt und bei dem die Wartung vereinfacht ist.

Diese Aufgabe wird durch einen Aufsitzmäher mit den Merkmalen des Anspruchs 1 gelöst.

Durch die geteilte Ausbildung des Chassis mit einem oberen und einem unteren Rahmenteil und die schwenkbare Lagerung des oberen Rahmenteils an dem unteren Rahmenteil kann der Sitz mit dem oberen Rahmenteil zusammen auf einfache Weise von dem Antriebsmotor weggeklappt werden, so dass dieser für Wartungsarbeiten oder dgl. gut zugänglich wird. Dadurch, dass das Chassis selbst das obere und das untere Rahmenteil umfasst, die gegeneinander verschwenkbar sind, kann der weitere Aufbau des Aufsitzmähers im Wesentlichen unverändert bleiben.

Das obere Rahmenteil ist insbesondere zwischen einer Betriebsposition und einer Wartungsposition verschwenkbar. Vorteilhaft ist das obere Rahmenteil von der Betriebsposition in die Wartungsposition um einen Winkel zwischen etwa 30° und etwa 60° verschwenkbar. Durch einen so gewählten Verschwenkwinkel wird eine gute Zugänglichkeit beispielsweise des Antriebsmotors oder anderer, an dem unteren Rahmenteil angeordneter Komponenten gewährleistet. Außerdem kann verhindert werden, dass der Aufsitzmäher aufgrund des je nach Konstruktion vergleichsweise großen Gewichts des oberen Rahmenteils mit den daran angeordneten Komponenten umkippen kann. Der Antriebsmotor ist ein Verbrennungsmotor, und der Aufsitzmäher umfasst einen Betriebsmitteltank für den Antriebsmotor, der an dem oberen Rahmenteil angeordnet ist. Dadurch wird eine gute Zugänglichkeit des Betriebsmitteltanks, beispielsweise des Kraftstofftanks, zum Befüllen erreicht.

Außerdem kann aufgrund der Anordnung an dem oberen Rahmenteil sichergestellt werden, dass das Betriebsmittel dem Antriebsmotor aufgrund der Schwerkraft zuverlässig zugeführt wird. Die Einfüllöffnung des Kraftstofftanks ist vorteilhaft so angeordnet, dass weder in der Betriebsposition noch in der Wartungsposition Kraftstoff durch die Einfüllöffnung aus dem Kraftstofftank austreten kann. Dies wird auf einfache Weise durch eine Anordnung der Einfüllöffnung im vorderen und oberen Bereich des Kraftstofftanks erreicht. Die Betriebsmittelleitung, die den Betriebsmitteltank mit dem Antriebsmotor verbindet, ist vorteilhaft so ausgelegt und angeordnet, dass der Betriebsmitteltank in beiden Positionen des oberen Rahmenteils über die Betriebsmittelleitung mit dem Antriebsmotor verbunden ist. Ein Abmontieren der Betriebsmittelleitung ist dadurch nicht notwendig.

Vorteilhaft ist der Antriebsmotor über mindestens einen Bedienhebel bedienbar, wobei der Bedienhebel an dem oberen Rahmenteil angeordnet ist. Zweckmäßig ist der Bedienhebel, der beispielsweise ein Gashebel oder ein Schalthebel sein kann, in der Betriebsposition und in der Wartungsposition mit dem Antriebsmotor wirkverbunden. Das Verbindungselement zwischen dem Bedienhebel und dem Antriebsmotor, beispielsweise ein Bowdenzug ist zweckmäßig so angeordnet und in seiner Länge so ausgelegt, dass ein Lösen der Wirkverbindung auch beim Verschwenken des oberen Rahmenteils nicht notwendig ist. Dadurch kann das obere Rahmenteil schnell und einfach verschwenkt werden, ohne dass aufwendige vorbereitende Arbeiten notwendig sind.

Vorteilhaft ist die Lage des oberen Rahmenteils in Betriebsposition über mindestens ein Sicherungsmittel gesichert. Das Sicherungsmittel stellt sicher, dass das obere Rahmenteil in der Betriebsposition nicht unbeabsichtigt verschwenkt werden kann. Als Sicherungsmittel sind vorteilhaft zwei Schrauben vorgesehen. Das Chassis umfasst insbesondere eine Sicherungseinrichtung, die das obere Rahmenteil in der Wartungsposition sichert. Die Sicherungseinrichtung stellt sicher, dass das obere Rahmenteil weder aus der Wartungsposition weiter nach hinten verschwenken kann, noch unbeabsichtigt zurück in die Betriebsposition verschwenken kann. Die Sicherungseinrichtung umfasst vorteilhaft einen in einer Nut geführten Sicherungsriegel.

Zweckmäßig besitzt der Aufsitzmäher eine Rückwand, an der der Grasfangbehälter insbesondere lösbar gehalten ist. Es ist vorgesehen, dass die Rückwand an dem oberen Rahmenteil angeordnet ist, so dass die Rückwand zusammen mit dem Grasfangbehälter oder ohne den Grasfangbehälter beim Verschwenken des oberen Rahmenteils ebenfalls nach hinten geschwenkt wird. Die Anordnung ist dabei insbesondere so gewählt, dass die Rückwand und auch der Grasfangbehälter auch in der Wartungsposition nicht mit dem Boden in Kontakt kommen, sondern zu diesem einen Abstand besitzen. Vorteilhaft wird der Grasfangbehälter vor dem Verschwenken des oberen Rahmenteils abgenommen. Die Rückwand besitzt vorteilhaft eine Zuführöffnung für den Grasfangbehälter, an der in Betriebsposition des oberen Rahmenteils ein Grasauswurfkanal mündet.

An dem unteren Rahmenteil ist insbesondere das Mähwerk gelagert. Das Mähwerk ist dabei insbesondere an dem unteren Rahmenteil vorteilhaft höhenverstellbar angeordnet. Der Höhenverstellhebel für das Mähwerk ist, um eine ergonomische Bedienung zu ermöglichen, zweckmäßig an dem oberen Rahmenteil angeordnet und über ein lösbares Verbindungselement mit dem Mähwerk wirkverbunden. Der Höhenverstellhebel stellt die Höhe des Mähwerks dabei insbesondere mechanisch ein. Ein Verschwenken des oberen Rahmenteils bis zur Wartungsposition ist bei bestehender Wirkverbindung zwischen Höhenverstellhebel und Mähwerk bei der gezeigten Ausbildung nicht möglich. Die Wirkverbindung ist deshalb lösbar ausgebildet. Eine einfache konstruktive Gestaltung ergibt sich, wenn das Verbindungselement eine Koppelstange ist, die an einem Ende in einer Öse lösbar eingehängt ist. Um das obere Rahmenteil zu verschwenken, müssen demnach vorteilhaft nur die Koppelstange aus der Öse ausgehängt werden und eventuelle Sicherungselemente gelöst werden. Es kann auch vorgesehen sein, dass der Grasauswurfkanal vor dem Verschwenken des oberen Rahmenteils mindestens teilweise demontiert werden muss.

Es ist vorgesehen, dass am oberen Rahmenteil unterhalb des Sitzes eine Abdeckhaube angeordnet ist, die mit dem oberen Rahmenteil verschwenkbar ist. Dadurch wird der Bereich unterhalb des Sitzes, in dem insbesondere auch der Antriebsmotor angeordnet ist, durch Verschwenken des oberen Rahmenteils gut zugänglich.

Vorteilhaft besitzt die Abdeckhaube eine verschließbare Zugangsöffnung, über die eine Einfüllöffnung eines Betriebsmitteltanks zugänglich ist. Der Betriebsmitteltank ist insbesondere ein Öltank. Dadurch kann Öl nachgefüllt werden, ohne dass das obere Rahmenteil in die Wartungsposition verschwenkt werden muss. Vorteilhaft ist über die Zugangsöffnung auch der Ölmessstab zugänglich. Eine besonders vorteilhafte Gestaltung ergibt sich, wenn die Zugangsöffnung über einen Deckel verschließbar ist, der ein Ablagefach aufweist. Dadurch kann auf einfache Weise ein Ablagefach, beispielsweise für Werkzeug, Getränkedosen, Getränkebecher oder dgl. integriert werden.

Ein Ausführungsbeispiel der Erfindung wird im Folgenden anhand der Zeichnung erläutert. Es zeigen:
- Fig. 1: eine perspektivische Darstellung eines Aufsitzmähers,
- Fig. 2: das Chassis des Aufsitzmähers aus Fig. 1 in Betriebsposition,
- Fig. 3: eine perspektivische Darstellung des Chassis in Wartungsposition,
- Fig. 4: eine perspektivische Darstellung des Chassis in Betriebsposition ohne Abdeckhaube,
- Fig. 5: eine perspektivische Darstellung des Chassis ohne Abdeckhaube in Wartungsposition,
- Fig. 6: eine weitere perspektivische Darstellung des Chassis ohne Abdeckhaube in Betriebsposition,
- Fig. 7: eine weitere perspektivische Darstellung des Chassis ohne Abdeckhaube in Wartungsposition,
- Fig. 8: eine perspektivische Darstellung des Aufsitzmähers bei geschlossener Zugangsöffnung,
- Fig. 9: eine perspektivische Darstellung des Aufsitzmähers bei geöffneter Zugangsöffnung.

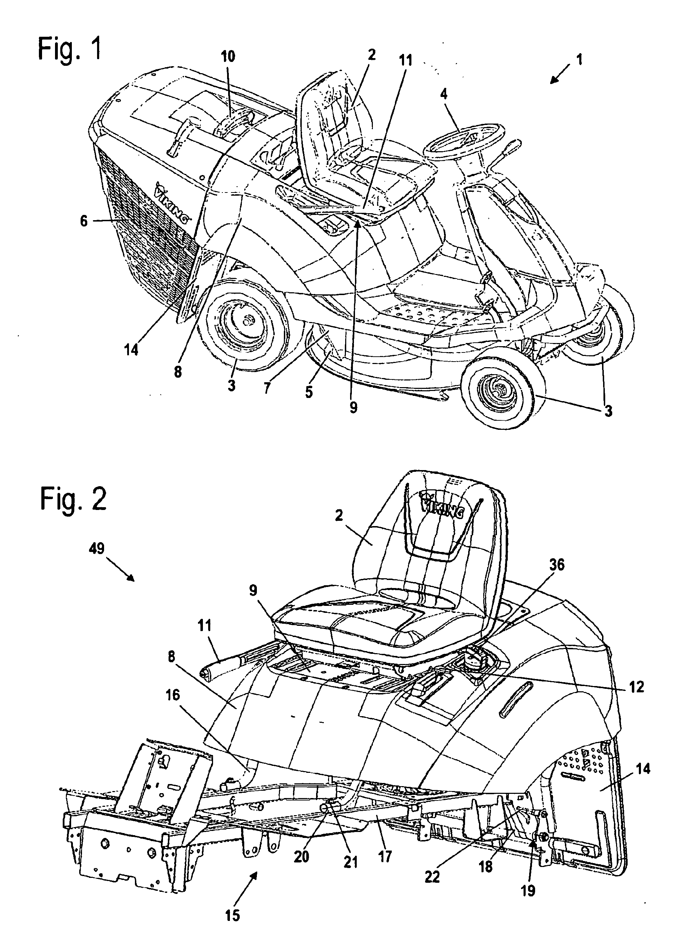

Fig. 1 zeigt einen Aufsitzmäher 1 in perspektivischer Darstellung. Der Aufsitzmäher 1 besitzt vier Räder 3, mit denen der Aufsitzmäher 1 über den Boden fahren kann. Für den Bediener ist ein Sitz 2 vorgesehen. Zum Steuern besitzt der Aufsitzmäher 1 ein Steuerrad 4. Im Bereich zwischen den Vorderrädern und den Hinterrädern ist ein Mähwerk 5 angeordnet, das Gras oder dgl. in einer eingestellten Schnitthöhe schneidet. Zur Einstellung der Schnitthöhe ist ein benachbart zum Sitz 2 angeordneter Höhenverstellhebel 11 vorgesehen. Im Bereich unterhalb des Sitzes 2 ist eine Abdeckhaube 8 angeordnet, die darunter liegende Komponenten vor Verschmutzung schützt. Die Abdeckhaube 8 schützt den Benutzer außerdem vor unbeabsichtigtem Kontakt mit unter der Abdeckhaube 8 angeordneten drehenden und/oder heißen Komponenten. Durch die Abdeckhaube 8 ragt der Höhenverstellhebel 11. Der Aufsitzmäher 1 besitzt eine Rückwand 14, die sich hinter den Hinterrädern erstreckt und an der ein Grasfangbehälter 6 eingehängt ist.

Der Grasfangbehälter 6 besitzt einen Griff 10 zum Tragen. Das Mähwerk 5 ist über einen Grasauswurfkanal 7 mit dem Grasfangbehälter 6 verbunden und fördert über den Grasauswurfkanal 7 Schnittgut in den Grasfangbehälter 6.

Der Aufsitzmäher 1 besitzt ein Chassis 15, das in Fig. 2 perspektivisch gezeigt ist. Wie Fig. 2 zeigt, umfasst das Chassis 15 ein oberes Rahmenteil 16, an dem die Abdeckhaube 8, der Höhenverstellhebel 11 und der Sitz 2 mit seiner Sitzkonsole 9 angeordnet sind. An der Sitzkonsole 9 ist der Sitz 2 in Längsrichtung verstellbar angeordnet. Wie Fig. 2 zeigt, ragt durch die Abdeckhaube 8 an der dem Höhenverstellhebel 11 gegenüberliegenden Seite des Sitzes 2 ein Tankdeckel 36 eines in Fig. 2 nicht gezeigten Kraftstofftanks. Benachbart zum Tankdeckel 36 ist ein Bedienhebel 12 vorgesehen, der ebenfalls durch die Abdeckhaube 8 ragt. Der Bedienhebel 12 ist beispielsweise ein Schalthebel oder ein Gashebel. Am oberen Rahmenteil 16 ist außerdem die Rückwand 14 fixiert.

Das Chassis 15 besitzt außerdem ein unteres Rahmenteil 17, an dem die in Fig. 2 nicht gezeigten Räder 3 und das in Fig. 2 nicht gezeigte Mähwerk 5 gelagert sind. Das obere Rahmenteil 16 ist an dem unteren Rahmenteil 17 mit zwei Drehgelenken 19, von denen in Fig. 2 eines sichtbar ist, um eine Schwenkachse 18 schwenkbar gelagert. In Fig. 2 ist das obere Rahmenteil 16 in einer Betriebsposition 49 gezeigt. In dieser Position liegt das obere Rahmenteil 16 mit seinem dem Steuerrad 4 und den Vorderrädern zugewandt liegenden, vorderen Bereich an zwei Auflagestellen 20 auf dem unteren Rahmenteil 17 auf und ist über zwei Sicherungsschrauben 21 an dem unteren Rahmenteil 17 fixiert. Benachbart zur Schwenkachse 18 ist ein Sicherungsriegel 22 am oberen Rahmenteil 16 schwenkbar gelagert, der im Folgenden noch näher beschrieben wird.

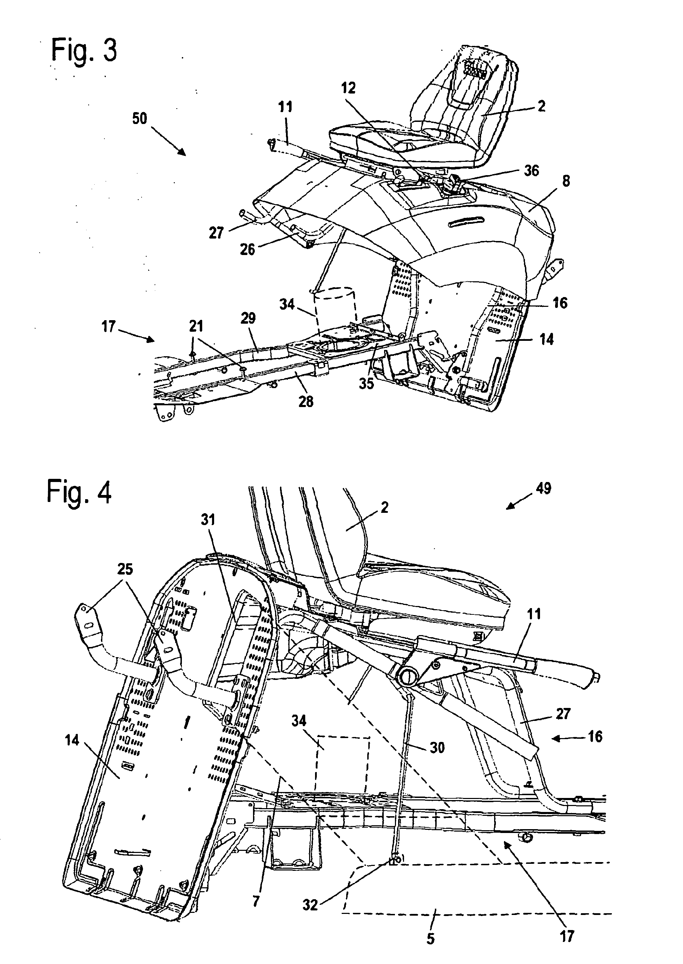

Fig. 3 zeigt das obere Rahmenteil 16 in Wartungsposition 50, in der das obere Rahmenteil 16 nach hinten und oben vom unteren Rahmenteil 17 weggeschwenkt ist. Dadurch wird ein in Betriebsposition 49 unter dem Sitz 2 am unteren Rahmenteil 17 gehaltener Antriebsmotor 34 für Wartungszwecke zugänglich. Wie Fig. 3 zeigt, ist das obere Rahmenteil 16 aus zwei gebogenen Rohren 26 und 27 gebildet. Das untere Rahmenteil 17 umfasst zwei Längsträger 28 und 29, zwischen denen der Antriebsmotor 34 auf einer Auflageplatte 35 gehalten ist. Der Antriebsmotor 34 dient zum Antrieb der Messer des Mähwerks 5 und zum Antrieb der Räder 3, um den Aufsitzmäher 1 fortzubewegen.

Wie Fig. 4 zeigt, besitzt die Rückwand 14 an ihrer hinteren, dem Sitz 2 abgewandten Seite zwei Arme 25, an denen der Grasfangbehälter 6 eingehängt werden kann. Die Rückwand 14 besitzt eine Zuführöffnung 31, über die Schnittgut in den in Fig. 4 nicht gezeigten Grasfangbehälter 6 zugeführt werden kann. Hierzu ist das Mähwerk 5 über den Grasauswurfkanal 7 mit der Zuführöffnung 31 verbunden. Zur Einstellung der Schnitthöhe ist der Höhenverstellhebel 11 über eine Koppelstange 30 mit dem Mähwerk 5 verbunden. Die Koppelstange 30 ist in einer Öse 32 am Mähwerk 5 eingehängt und stellt so eine feste Verbindung zwischen dem Höhenverstellhebel 11 und dem Mähwerk 5 her. Vorteilhaft ist die Koppelstange 30 in der Öse 32 gegen unbeabsichtigtes Aushängen gesichert, beispielsweise über einen in der schematischen Darstellung nicht gezeigten Sicherungssplint. Wird der Höhenverstellhebel 11 verschwenkt, so ändert sich die Position der Koppelstange 30 entsprechend und das Mähwerk 5 wird angehoben oder abgesenkt. Bei der in Fig. 4 gezeigten Betriebsposition 49 des oberen Rahmenteils 16 sind der Höhenverstellhebel 11 und das Mähwerk 5 wirkverbunden. Fig. 4 zeigt schematisch auch die Anordnung des Antriebsmotors 34 unter dem Sitz 2.

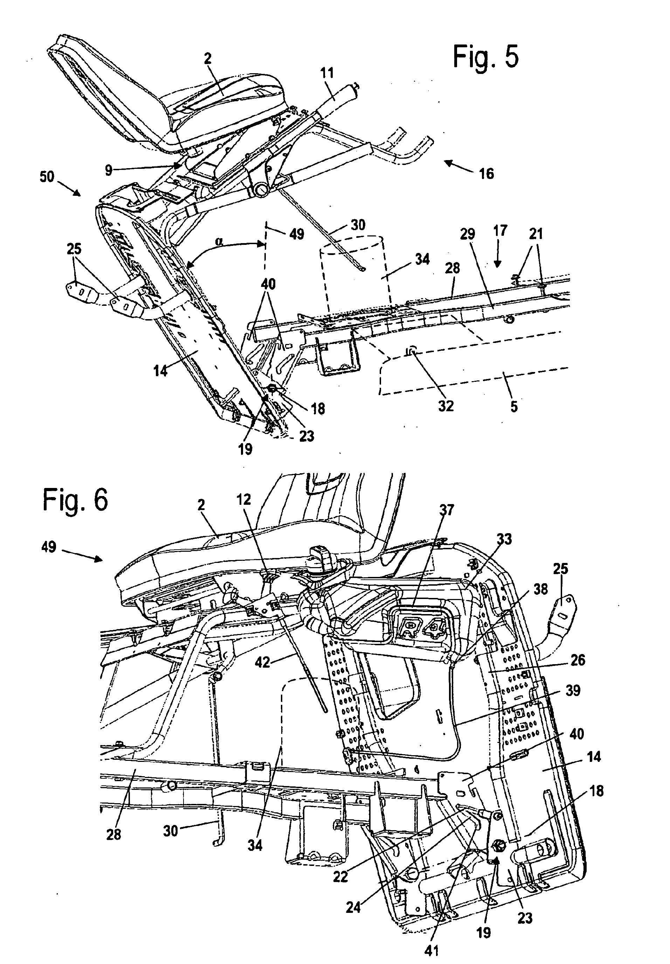

Um das obere Rahmenteil 16 mit dem Sitz 2 in die in Fig. 5 gezeigte Wartungsposition 50 zu verstellen, wird zunächst der Grasfangbehälter 6 abgenommen. Anschließend wird der Grasauswurfkanal 7 demontiert. Der am Mähwerk 5 angeformte Abschnitt des Grasauswurfkanals 7 wird allerdings nicht demontiert. Anschließend wird die Koppelstange 30 aus der Öse 32 ausgehängt, so dass der Höhenverstellhebel 11 und das Mähwerk 5 nicht mehr in Wirkverbindung miteinander stehen. Ein zur Sicherung der Koppelstange 30 in der Öse 32 vorgesehenes Sicherungsmittel wie ein Sicherungssplint oder dgl. wird vor dem Aushängen entfernt. Zum Aushängen wird die Koppelstange 30 in Richtung auf den Antriebsmotor 34 gedrückt. Anschließend werden die Sicherungsschrauben 21 gelöst. Nach Lösen der Sicherungsschrauben 21 kann das obere Rahmenteil 16 dann um einen Winkel α nach hinten, also entgegen der Blickrichtung des Bedieners im Betrieb, verschwenkt werden. Der Winkel α beträgt vorteilhaft etwa 30° bis etwa 60°. Als besonders vorteilhaft wird ein Winkel α von etwa 40° bis etwa 50° angesehen.

In Fig. 5 ist auch das zweite Drehgelenk 19 gezeigt. Wie Fig. 5 zeigt, ist am oberen Rahmenteil 16 jeweils eine Lagerplatte 23 fixiert. Die beiden Längsträger 28 und 29 sind jeweils mit einer Anschlussplatte 40 verbunden. Die Lagerplatten 23 und die Anschlussplatten 40 bilden mit jeweils einem Bolzen, der eine Lagerplatte 23 und eine Anschlussplatte 40 durchragt, die beiden Drehgelenke 19. Die beiden Drehgelenke 19 sind vorteilhaft symmetrisch ausgebildet.

Fig. 6 zeigt das obere Rahmenteil 16 in Betriebsposition 49. Wie Fig. 6 zeigt, ist am ersten Rohr 26 des oberen Rahmenteils 16 ein Haltebügel 37 für einen Kraftstofftank 33 fixiert. Der Kraftstofftank 33 ist an dem Haltebügel 37 eingehängt. Der Kraftstofftank 33 besitzt in seinem hinteren, unteren Bereich einen Anschlussnippel 38, auf den eine Kraftstoffleitung 39 aufgeschoben ist. Die Kraftstoffleitung 39 verbindet das Innere des Kraftstofftanks 33 mit dem Antriebsmotor 34, der in Fig. 6 schematisch gezeigt ist. Wie Fig. 6 auch zeigt, ist der Bedienhebel 12 über einen Gaszug 42 mit dem Antriebsmotor 34 verbunden. Der Bedienhebel 12 ist an der Abdeckung 8 des oberen Rahmenteils 16 fixiert.

Wie Fig. 6 zeigt, besitzt die Anschlussplatte 40, welche am ersten Längsträger 28 befestigt ist, eine Nut 24, in die der an der Lagerplatte 23 schwenkbar gelagerte Sicherungsriegel 22 ragt. In der in Fig. 6 gezeigten Betriebsposition 49 ist der Sicherungsriegel 22 an einem Ende der Nut 24 angeordnet. In diesem Abschnitt verläuft die Nut 24 zur Rückwand 14 geneigt. An ihrem anderen Ende besitzt die Nut 24 einen Sperrabschnitt 41, in dem die Nut 24 etwa vertikal nach unten verläuft.

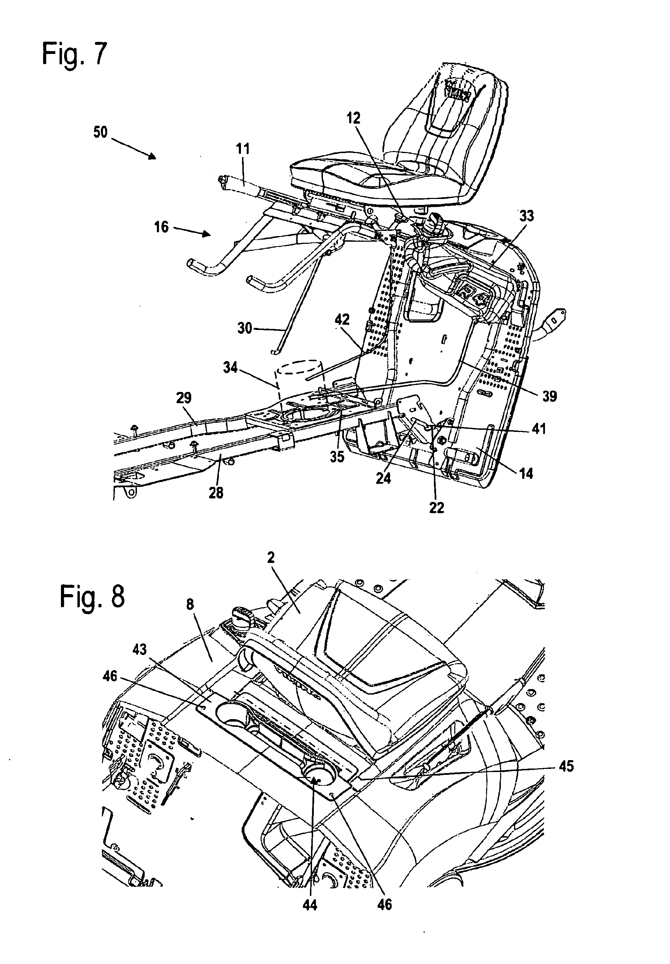

Beim Verschwenken des oberen Rahmenteils 16 in die in Fig. 7 gezeigte Wartungsposition 50 gleitet der Sicherungsriegel 22 in der Nut 24 ab, bis er in Wartungsposition 50 im Sperrabschnitt 41 angeordnet ist. Der Sperrabschnitt 41 ist zum Lagerpunkt des Sicherungsriegels 22 so angeordnet, dass der Sicherungsriegel 22 durch Druck auf die Rückwand 14 nicht wieder nach oben verrutschen kann, so dass das obere Rahmenteil 16 über den Sicherungsriegel 22 in dieser Position gesichert ist. Gleichzeitig kann das obere Rahmenteil 16 nicht weiter nach hinten verschwenken, da der Sicherungsriegel 22 das obere Rahmenteil 16 in dieser Position hält. Zum Zurückschwenken muss zunächst der Sicherungsriegel 22 von Hand nach oben geschwenkt werden, bis er außerhalb des Sperrabschnitts 41 der Nut 24 angeordnet ist. Dann ist ein Zurückschwenken des oberen Rahmenteils 16 möglich.

Wie Fig. 7 schematisch zeigt, ist der Kraftstofftank 33 auch in Wartungsposition 50 über die Kraftstoffleitung 39 mit dem Antriebsmotor 34 verbunden. Auch die Verbindung des Bedienhebels 12 über den Gaszug 42 zum Antriebsmotor 34 besteht weiterhin. Der Gaszug 42 und die Kraftstoffleitung 39 sind entsprechend lang ausgebildet und so verlegt, dass diese die Schwenkbewegung des oberen Rahmenteils 16 in die Wartungsposition 50 nicht behindern. Wie Fig. 7 auch zeigt, ist der Antriebsmotor 34 auf einer Auflageplatte 35 montiert, die sich zwischen den beiden Längsträgern 28 und 29 des unteren Rahmenteils 17 erstreckt.

Fig. 8 zeigt eine perspektivische Darstellung des Aufsitzmähers von schräg oben auf den Bereich hinter dem Sitz 2. Hinter dem Sitz 2 ist an der Abdeckhaube 8 ein Deckel 43 angeordnet, der um eine Schwenkachse 45 schwenkbar gelagert ist. Der Deckel 43 ist über zwei Schnellverschlüsse 46, die beispielsweise Vierteldrehverschlüsse oder dgl. sein können, an der Abdeckhaube 8 fixiert. Der Deckel 43 besitzt ein Ablagefach 44, das als Vertiefung im Deckel 43 ausgebildet ist. Im Ausführungsbeispiel sind im Ablagefach 44 zwei Vertiefungen für Becher, Dosen oder dgl. und eine die beiden zylindrischen Vertiefungen verbindende Quervertiefung vorgesehen. Auch andere Gestaltungen des Ablagefachs 44 können vorteilhaft sein. Durch die Anordnung des Ablagefachs 44 hinter dem Sitz 2 ist das Ablagefach 44 zwar gut zugänglich, im Ablagefach 44 gehaltene Getränke oder dgl. sind jedoch vor unbeabsichtigtem Umstoßen geschützt.

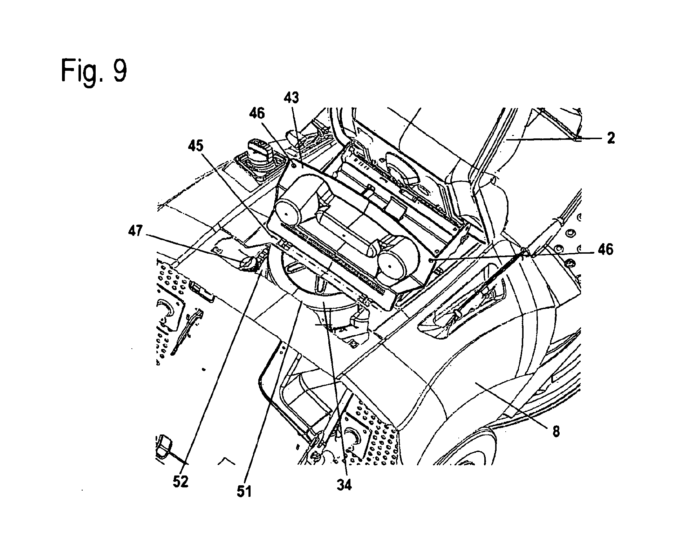

Fig. 9 zeigt den Deckel 43 in geöffnetem Zustand. Um den Deckel 43 um die Schwenkachse 45 nach vorn zu schwenken, muss zunächst der Sitz 2 gegenüber der Sitzschiene nach vorne geklappt werden. Das obere Rahmenteil, das in Fig. 9 nicht gezeigt ist, ist weiterhin fest auf dem ebenfalls nicht gezeigten unteren Rahmenteil gehalten. Zum Verschwenken des Deckels 43 müssen nach dem Vorklappen des Sitzes 2 die Schnellverschlüsse 46 geöffnet werden. Dann kann der Deckel 43 verschwenkt werden. Durch das Verschwenken des Deckels 43 wird eine Zugangsöffnung 51 zugänglich. Unterhalb der Zugangsöffnung 51 ist der Antriebsmotor 34 angeordnet. Über die Zugangsöffnung 51 wird der Öltankdeckel 47, der den Öltank 52 verschließt, zugänglich, so dass Öl ohne Verschwenken des oberen Rahmenteils 16 nachgefüllt werden kann. An dem Öltankdeckel 47 ist der Ölmessstab angeordnet, so dass über die Zugangsöffnung 51 auch der Ölstand abgelesen werden kann.

Wie die Figuren auch zeigen, ist das Ablagefach 44 in den Deckel 43 integriert. Der Deckel 43 kann aus Blech als Tiefziehteil oder aus Kunststoff hergestellt sein, so dass für das Ablagefach 44 keine separaten Bauteile benötigt werden.

## Patentansprüche

1. Aufsitzmäher mit einem Chassis (15), wobei an dem Chassis (15) ein Sitz (2) und ein Antriebsmotor (34) angeordnet sind, und mit einem Mähwerk (5),
wobei das Chassis (15) ein oberes Rahmenteil (16) umfasst, an dem der Sitz (2) gehalten ist, wobei das Chassis (15) ein unteres Rahmenteil (17) umfasst, an dem der Antriebsmotor (34) gehalten ist, wobei der Antriebsmotor (34) ein Verbrennungsmotor ist, wobei der Aufsitzmäher (1) einen Betriebsmitteltank für den Antriebsmotor (34) umfasst und wobei das obere Rahmenteil (16) an dem unteren Rahmenteil (17) schwenkbar gehalten ist,
**dadurch gekennzeichnet, dass** der Betriebsmitteltank an dem oberen Rahmenteil (16) angeordnet ist.

2. Aufsitzmäher nach Anspruch 1,
**dadurch gekennzeichnet, dass** das obere Rahmenteil (16) zwischen einer Betriebsposition (49) und einer Wartungsposition (50) verschwenkbar ist.

3. Aufsitzmäher nach Anspruch 2,
**dadurch gekennzeichnet, dass** das obere Rahmenteil (16) von der Betriebsposition (49) in die Wartungsposition (50) um einen Winkel (α) zwischen 30° und 60° verschwenkbar ist.

4. Aufsitzmäher nach Anspruch 2 oder 3,
**dadurch gekennzeichnet, dass** der Antriebsmotor (34) in Betriebsposition (49) mindestens teilweise unter dem Sitz (2) angeordnet ist und dass der Sitz (2) in Wartungsposition (50) von dem Antriebsmotor (34) nach hinten und oben weggeklappt ist.

5. Aufsitzmäher nach einem der Ansprüche 2 bis 4,
**dadurch gekennzeichnet, dass** der Betriebsmitteltank in beiden Positionen (49, 50) des oberen Rahmenteils (16) über eine Betriebsmittelleitung mit dem Antriebsmotor (34) verbunden ist.

6. Aufsitzmäher nach einem der Ansprüche 2 bis 5,
**dadurch gekennzeichnet, dass** der Antriebsmotor (34) über mindestens einen Bedienhebel (12) bedienbar ist, wobei der Bedienhebel (12) an dem oberen Rahmenteil (16) angeordnet ist.

7. Aufsitzmäher nach Anspruch 6,
**dadurch gekennzeichnet, dass** der Bedienhebel (12) in der Betriebsposition (49) und in der Wartungsposition (50) mit dem Antriebsmotor (34) wirkverbunden ist.

8. Aufsitzmäher nach einem der Ansprüche 2 bis 7,
**dadurch gekennzeichnet, dass** das Chassis (15) eine Sicherungseinrichtung umfasst, die das obere Rahmenteil (16) in der Wartungsposition (50) sichert.

9. Aufsitzmäher nach einem der Ansprüche 2 bis 8,
**dadurch gekennzeichnet, dass** die Lage des oberen Rahmenteils (16) in Betriebsposition (49) über mindestens ein Sicherungsmittel gesichert ist.

10. Aufsitzmäher nach einem der Ansprüche 2 bis 9,
**dadurch gekennzeichnet, dass** der Aufsitzmäher (1) eine Rückwand (14) besitzt, an der der Grasfangbehälter (6) gehalten ist, wobei die Rückwand (14) an dem oberen Rahmenteil (16) angeordnet ist.

11. Aufsitzmäher nach Anspruch 10,
**dadurch gekennzeichnet, dass** die Rückwand (14) eine Zuführöffnung (31) für den Grasfangbehälter (6) besitzt, an der in Betriebsposition (49) des oberen Rahmenteils (16) ein Grasauswurfkanal (7) mündet.

12. Aufsitzmäher nach einem der Ansprüche 1 bis 11,
**dadurch gekennzeichnet, dass** an dem unteren Rahmenteil (17) das Mähwerk (5) gelagert ist.

13. Aufsitzmäher nach Anspruch 12,
**dadurch gekennzeichnet, dass** das Mähwerk (5) an dem unteren Rahmenteil (17) höhenverstellbar angeordnet ist, und dass der Höhenverstellhebel (11) für das Mähwerk (5) an dem oberen Rahmenteil (16) angeordnet ist und über ein lösbares Verbindungselement mit dem Mähwerk (5) in Wirkverbindung steht.

14. Aufsitzmäher nach Anspruch 13,
**dadurch gekennzeichnet, dass** das Verbindungselement eine Koppelstange (30) ist, die an einem Ende in einer Öse (32) lösbar eingehängt ist.

15. Aufsitzmäher nach einem der Ansprüche 1 bis 14,
**dadurch gekennzeichnet, dass** am oberen Rahmenteil (16) unterhalb des Sitzes (2) eine Abdeckhaube (8) angeordnet ist, die mit dem oberen Rahmenteil (16) verschwenkbar ist.

16. Aufsitzmäher nach Anspruch 15,
**dadurch gekennzeichnet, dass** die Abdeckhaube (8) eine verschließbare Zugangsöffnung (51) besitzt, über die eine Einfüllöffnung eines Betriebsmitteltanks zugänglich ist.

17. Aufsitzmäher nach Anspruch 16,
**dadurch gekennzeichnet, dass** die Zugangsöffnung (51) über einen Deckel (43) verschließbar ist, der ein Ablagefach (44) aufweist.

## Claims

1. Ride-on mower with a chassis (15), a seat (2) and a drive motor (34) arranged on the chassis (15) and with a mower mechanism (5), the chassis (15) comprising an upper frame portion (16) on which the seat (2) is fixed and a lower frame portion (17) on which the drive motor (34) is fixed, the drive motor (34) being an internal combustion engine, wherein the ride-on mower (1) has a fuel tank for the drive motor (34) and the upper frame portion (16) is held and can pivot on the lower frame portion (17), **characterised in that** the fuel tank is arranged on the upper frame portion (16).

2. Ride-on mower according to Claim 1,
**characterised in that** the upper frame portion (16) can pivot between an operating position (49) and a maintenance position (50).

3. Ride-on mower according to Claim 2,
**characterised in that** the upper frame portion (16) can pivot from the operating position (49) to the maintenance position (50 through an angle (□) of between 30° and 60°.

4. Ride-on mower according to Claims 2 or 3,
**characterised in that** in the operating position (49) the drive motor (34) is located at least partially under the seat (2) and in the maintenance position (50) the seat (2) is tilted backwards and upwards away from the drive motor (34).

5. Ride-on mower according to any of Claims 2 to 4,
**characterised in that** in both positions (49, 50) of the upper frame portion (16) the fuel tank is connected to the drive motor (34) by a fuel line.

6. Ride-on mower according to any of Claims 2 to 5,
**characterised in that** the drive motor (34) can be operated by means of at least one operating lever (12), the said operating lever (12) being arranged on the upper frame portion (16).

7. Ride-on mower according to Claim 6,
**characterised in that** in both the operating position (49) and the maintenance position (50) the operating lever (12) is functionally connected to the drive motor (34).

8. Ride-on mower according to any of Claims 2 to 7,
**characterised in that** the chassis (15) has a securing device which secures the upper frame portion (16) in the maintenance position (50).

9. Ride-on mower according to any of Claims 2 to 8,
**characterised in that** the position of the upper frame portion (16) when in the operating position (49) is secured by at least one securing means.

10. Ride-on mower according to any of Claims 2 to 9,
**characterised in that** the ride-on mower (1) has a rear panel (14) on which the bin (6) for grass cuttings is held, the said rear panel (14) being fixed on the upper frame portion (16).

11. Ride-on mower according to Claim 10,
**characterised in that** the rear panel (14) has an inlet opening (31) for the grass cuttings bin (6), into which a grass ejection duct (7) opens in the operating position (49) of the upper frame portion (16).

12. Ride-on mower according to any of Claims 1 to 11,
**characterised in that** the mower mechanism (5) is mounted on the lower frame portion (17).

13. Ride-on mower according to Claim 12,
**characterised in that** the mower mechanism (5) is arranged on the lower frame portion (17) in such manner that its height can be adjusted, and the height adjustment lever (11) for the mower mechanism (5) is arranged on the upper frame portion (16) and is functionally connected to the mower mechanism (5) by means of a releasable connecting element.

14. Ride-on mower according to Claim 13,
**characterised in that** the said connecting element is a coupling rod (30), which is releasably suspended at one end in an eyelet (32).

15. Ride-on mower according to any of Claims 1 to 14,
**characterised in that** on the upper frame portion (16) under the seat (2) is arranged a covering hood (8), which can pivot with the upper frame portion (16).

16. Ride-on mower according to Claim 15,
**characterised in that** the covering hood (8) has a closable access opening (51) through which a filling opening of a fuel tank can be accessed.

17. Ride-on mower according to Claim 16,
**characterised in that** the access opening (51) can be closed by a cover (43), which comprises a storage space (44).

## Revendications

1. Tondeuse autoportée avec un châssis (15), étant précisé qu'un siège (2) et un moteur d'entraînement (34) sont disposés sur le châssis (15), et avec un mécanisme de coupe (5), étant précisé que le châssis (15) comprend un élément de châssis supérieur (16) auquel est fixé le siège (2), que le châssis (15) comprend un élément de châssis inférieur (17) auquel est fixé le moteur d'entraînement (34), que le moteur d'entraînement (34) est constitué par un moteur à combustion interne, que la tondeuse autoportée (1) comprend un réservoir de carburant pour le moteur d'entraînement (34), et que l'élément de châssis supérieur (16) est fixé pivotant à l'élément de châssis inférieur (17),
**caractérisée en ce que** le réservoir de carburant est disposé sur l'élément de châssis supérieur (16).

2. Tondeuse autoportée selon la revendication 1,
**caractérisée en ce que** l'élément de châssis supérieur (16) est apte à pivoter entre une position de fonctionnement (49) et une position d'entretien (50).

3. Tondeuse autoportée selon la revendication 2,
**caractérisée en ce que** l'élément de châssis supérieur (16) est apte à pivoter de la position de fonctionnement (49) vers la position d'entretien (50) suivant un angle (α) situé entre 30° et 60°.

4. Tondeuse autoportée selon la revendication 2 ou 3,
**caractérisée en ce que** le moteur d'entraînement (34), dans la position de fonctionnement (49), est disposé au moins en partie sous le siège (2) et **en ce que** le siège (2), en position d'entretien (50), est rabattu en étant éloigné du moteur d'entraînement (34) vers l'arrière et vers le haut.

5. Tondeuse autoportée selon l'une des revendications 2 à 4,
**caractérisée en ce que** le réservoir de carburant, dans les deux positions (49, 50) de l'élément de châssis supérieur (16), est relié au moteur d'entraînement (34) par une conduite de carburant.

6. Tondeuse autoportée selon l'une des revendications 2 à 5,
**caractérisée en ce que** le moteur d'entraînement (34) est apte à être commandé par l'intermédiaire d'au moins un levier de commande (12), étant précisé que le levier de commande (12) est disposé sur l'élément de châssis supérieur (16).

7. Tondeuse autoportée selon la revendication 6,
**caractérisée en ce que** le levier de commande (12), dans la position de fonctionnement (49) et dans la position d'entretien (50), est en relation fonctionnelle avec le moteur d'entraînement (34).

8. Tondeuse autoportée selon l'une des revendications 2 à 7,
**caractérisée en ce que** le châssis (15) comprend un dispositif de blocage qui bloque l'élément de châssis supérieur (16) dans la position d'entretien (50).

9. Tondeuse autoportée selon l'une des revendications 2 à 8,
**caractérisée en ce que** la position de l'élément de châssis supérieur (16) est bloquée dans la position de fonctionnement (49) par au moins un moyen de blocage.

10. Tondeuse autoportée selon l'une des revendications 2 à 9,
**caractérisée en ce que** la tondeuse autoportée (1) a une paroi arrière (14) à laquelle est fixé le bac de ramassage (6), étant précisé que la paroi arrière (14) est disposée sur l'élément de châssis supérieur (16).

11. Tondeuse autoportée selon la revendication 10,
**caractérisée en ce que** la paroi arrière (14) a une ouverture d'amenée (31) pour le bac de ramassage (6), au niveau de laquelle débouche un conduit d'éjection d'herbe (7), dans la position de fonctionnement (49) de l'élément de châssis supérieur (16).

12. Tondeuse autoportée selon l'une des revendications 1 à 11,
**caractérisée en ce que** le mécanisme de coupe (5) est monté sur l'élément de châssis inférieur (17).

13. Tondeuse autoportée selon la revendication 12,
**caractérisée en ce que** le mécanisme de coupe (5) est disposé sur l'élément de châssis inférieur (17) en étant réglable en hauteur, et **en ce que** le levier de réglage de hauteur (11) pour le mécanisme de coupe (5) est disposé sur l'élément de châssis supérieur (16) et est en relation fonctionnelle avec ledit mécanisme de coupe (5) par l'intermédiaire d'un élément de liaison amovible.

14. Tondeuse autoportée selon la revendication 13,
**caractérisée en ce que** l'élément de liaison est constitué par une tige d'accouplement (30) qui est accrochée de manière amovible dans un oeillet (32), à une extrémité.

15. Tondeuse autoportée selon l'une des revendications 1 à 14,
**caractérisée en ce qu'**il est prévu sur l'élément de châssis supérieur (16), au-dessous du siège (2), un capot (8) qui est apte à pivoter avec ledit élément de châssis supérieur (16).

16. Tondeuse autoportée selon la revendication 15,
**caractérisée en ce que** le capot (8) a une ouverture d'accès (51) apte à être fermée, par laquelle une ouverture de remplissage d'un réservoir de carburant est accessible.

17. Tondeuse autoportée selon la revendication 16,
**caractérisée en ce que** l'ouverture d'accès (51) est apte à être fermée par un couvercle (43) qui présente un compartiment (44).
